# EUROPÄISCHE PATENTSCHRIFT

(11) **EP 3 004 792 B1**
(45) Veröffentlichungstag und Bekanntmachung des Hinweises auf die Patenterteilung: **27.12.2017**
(21) Anmeldenummer: 14728419.4
(22) Anmeldetag: 25.04.2014
(51) Int. Cl.: B63G 8/00

(54) **UNBEMANNTES UNTERWASSERFAHRZEUG MIT EINEM DRUCKKÖRPER UND VERFAHREN ZUM SCHUTZ VOR ÜBERHITZUNG**
UNMANNED UNDERWATER VEHICLE WITH A PRESSURE HULL, AND A METHOD FOR PROTECTION AGAINST OVERHEATING
VÉHICULE SOUS-MARIN AUTONOME POURVU D'UNE COQUE DE HAUTE PRESSION, ET PROCÉDÉ CORRESPONDANT

(30) Priorität: 30.05.2013 DE 102013105592
(43) Veröffentlichungstag der Anmeldung: 13.04.2016
(73) Patentinhaber: ATLAS ELEKTRONIK GmbH, 28309 Bremen (DE)
(72) Erfinder: WALTL, Bernd, 28844 Weyhe (DE)
(86) Internationale Anmeldenummer: PCT/DE2014/100142
(87) Internationale Veröffentlichungsnummer: WO 2014/190972

(56) Entgegenhaltungen:
- WO-A1-2011/033294
- WO-A1-2011/089182
- WO-A1-2011/149544
- DE-A1- 19 537 683
- DE-C1- 10 106 521
- US-A1- 2009 167 861

## Beschreibung

Die Erfindung betrifft eine Vorrichtung zum Schutz eines Druckkörpers bei einem thermischen Durchgehen von Batterien gemäß dem Oberbegriff des Anspruchs 1. Die Erfindung betrifft außerdem ein Verfahren zum Schutz eines Druckkörpers bei einem thermischen Durchgehen von Batterien gemäß dem Oberbegriff des Anspruchs 7.

Unbemannte Unterwasserfahrzeuge dienen zur Untersuchung des Unterwasserraums. Eine Unterklasse der unbemannten Unterwasserfahrzeuge sind autonome Unterwasserfahrzeuge, die allgemein als "Autonomous Underwater Vehicles" (AUV) bezeichnet werden. Eine weitere Unterklasse sind die ferngesteuerten Unterwasserfahrzeuge, die als "Remotely Operated Vehicles" (ROV) bezeichnet werden. Während ROVs über ein Kabel mit einem Überwasserfahrzeug verbunden sind und darüber Energie- und Datenaustausch stattfindet, arbeiten AUVs autonom. AUVs haben daher eine eigene Energieversorgung durch Akkumulatoren oder Batterien. Vorzugsweise werden dabei wiederaufladbare Batterien eingebaut, wobei die Ausbildung der Batterie-Zelle u.a. die zeitliche Tauchlänge des AUV mitbestimmt.

Bevorzugt werden Lithium-Ionen-Batterien verwendet, da sie sich durch eine hohe Energiedichte und thermische Stabilität auszeichnen und keinem Memory-Effekt unterliegen. Je nach zugrundeliegender Chemie der Batterie werden Lithium-Ionen-Batterien weiter unterteilt. Lithium-Polymer-Batterien haben im Gegensatz zu Lithium-Ionen-Batterien keinen flüssigen Elektrolyten, sondern einen Elektrolyten in Polymerform. Eine Polymerfolie (Kunststofffolie) wird dabei mit einem Gel-Elektrolyt (meist ein Lösungsmittel auf Alkoholbasis) versetzt und als Separator zwischen den beiden Elektroden eingefügt. Auch Kathode - in Form von Lithium-Metalloxiden - und Anode - in Form einer Kohlenstoffmatrix wie Graphit - bestehen aus beidseitig beschichteten Kunststofffolien. Diese Kombination ist gegen Verformung relativ stabil, weshalb ohne ein starres Gehäuse ausgekommen wird. Als Schutzhülle wird zumeist eine mit Kunststoff ummantelte Aluminiumfolie - auch Verbundfolie genannt - verwendet. Die zweiseitige Beschichtung der Folien führt zu einer höheren Energiedichte.

Lithium-Polymer-Batterien sind jedoch mechanisch, elektrisch und thermisch sehr empfindlich. Beschädigungen an der Batterie, ein Überladen oder Tiefentladen, zu hohe Ströme, langes Lagern oder der Betrieb bei zu hohen oder zu niedrigen Temperaturen können die Zelle beschädigen oder zerstören. Durch Kurzschluss oder andere mechanische Beschädigungen kann es zu einer positiven Rückkopplung kommen, die ein thermisches Durchgehen (thermal runaway) der Batterie auslösen kann. In der Batterie entstehende Wärme beschleunigt dabei die elektrochemischen Prozesse, die ihrerseits exotherm sind. Da die frei werdende Wärmeenergie nicht mehr abgeführt werden kann, entsteht eine Kettenreaktion bei der die Temperaturen weiterhin stark ansteigen. Weitere Folgen können Batteriebrand - und in Folge dessen Rauchentwicklung - oder sogar eine Explosion sein. Dies geht auch mit der Zersetzung der Batterie einher, wodurch sich giftige sowie leicht entzündliche Gase (z.B. Wasserstoff, Kohlenwasserstoff) bilden können. Insbesondere der Kontakt mit Wasser (z.B. durch Luftfeuchtigkeit) kann zur Bildung von hochentzündlichem Wasserstoffgas führen.

AUVs werden immer öfter als Teil mobiler Einrichtungen verwendet, um eine schnelle Einsatzbereitschaft überall auf der Welt zu gewährleisten. Im Rahmen dieser Einrichtungen ist oft vorgesehen, dass das AUV in einem Container transportiert und gelagert wird, in dem auch Personen arbeiten. Z.B. kann der Container einen Kontrollraum beinhalten, von dem aus das AUV bei einem Einsatz im Wasser gesteuert werden kann.

Während Ruhezeiten des AUV kann es zur Lagerung des Gerätes im oder in der Nähe von dem Container kommen. Dies kann zu einer Gefährdung von sich in der Umgebung befindenden Personen führen, wenn es zu einem thermischen Durchgehen der Batterie kommt.

Ein AUV beinhaltet meist einen Druckkörper, in dem verschiedene Bauteile - u.a. die Batterien, aber auch Sensoren, Steuerungs- und Überwachungseinheiten, Dichtungen etc. - vor dem Außendruck des Wassers geschützt sind. Durch einen modularen Aufbau können sehr einfach zusätzliche Bauteile, die für den jeweiligen Einsatz notwendig sind, hinzugefügt werden. Bei einem thermischen Durchgehen der Batterien kann sich der Druckkörper selbst so stark erhitzen, dass Dichtungen beschädigt werden und somit Wassereintritt möglich ist oder dass durch die mit dem Temperaturanstieg einhergehende Gasentwicklung Explosionsgefahr besteht. Auch die Bauteile innerhalb des Druckkörpers können gefährdet sein, insbesondere durch den hohen Temperaturanstieg.
Die Ableitung von Wärme an das umgebende Wasser durch eine hohe Wärmeleitfähigkeit der Hülle ist durch das Nova Autonomous Underwater Vehicle der Cornell Universität (2009) bekannt. In diesem AUV bestehen die Endkappen der Hülle aus Aluminium, so dass die Wärme über zusätzliche Ventilatoren nach außen an das Wasser abgeführt wird. Während der Lagerung eines AUV an Deck eines Überwasserfahrzeugs - z.B. zum Aufladen der Batterien - ist jedoch die Wärmeableitung sehr viel geringer durch die schlechtere Wärmeleitfähigkeit von Luft.

Die WO 2011/149544 A1 offenbart ein unbemanntes batteriebetriebenes Fahrzeug mit einem batterietragenden Körper, welcher als Transportbehälter für eine Verfrachtung von Batterien und als primäres Strukturelement des Fahrzeugs ausgelegt ist. Beim Betrieb des Fahrzeuges wird die Batteriewärme passiv abgeführt.

Es ist somit die Aufgabe der Erfindung, bei einem einen Druckkörper aufweisenden Unterwasserfahrzeug die Folgen eines thermischen Durchgehens einer oder mehrerer Batterien (wie z.B. Überhitzung, Rauchentwicklung, Feuer und Explosionen) auf die durchgehende Batterie bzw. durchgehenden Batterien zu beschränken und somit den Druckkörper vor diesen Folgen zu schützen, wobei insbesondere der aktuelle Aufenthaltsort des AUV keine Rolle spielt.

Die Aufgabe wird gelöst durch ein Unterwasserfahrzeug nach Anspruch 1 sowie ein Verfahren nach Anspruch 7. Dabei weist der Druckkörper des Unterwasserfahrzeugs eine hohe Wärmekapazität auf. Durch die hohe Wärmekapazität des Materials nimmt der Körper die Wärme auf und bewirkt dadurch eine Beschränkung des Anstiegs der Temperatur im Innenraum. Die Temperatur steigt dabei aufgrund der vorbestimmten Bemessung der Wärmekapazität maximal so weit an bzw. wird derart begrenzt, dass der Druckkörper funktionstüchtig bleibt. Dies betrifft insbesondere die Dichtungen, die bei Überhitzung porös werden können oder anfangen zu schmelzen, weshalb die Dichtheit des Druckkörpers nicht mehr gewährleistet sein könnte. Dank der Erfindung kann der Druckkörper somit vor Überhitzung geschützt werden.

Bevorzugt besitzt das Material des Druckkörpers zusätzlich eine hohe Wärmeleitfähigkeit, um die Wärme innerhalb des Hüllenmaterials schnell zu verteilen und so keine lokalen Wärmeherde entstehen zu lassen. Die Wahl eines Materials nach den genannten Kriterien - nämlich einer hohen Wärmekapazität und einer hohen Wärmeleitfähigkeit - schützt den Druckkörper vor einer Überhitzung.

In einer bevorzugten Ausführungsform weist der Druckkörper ein oder mehrere Druckbehälter auf, wobei in jedem der Druckbehälter bevorzugt mindestens eine Batterie angeordnet ist. Die Druckbehälter haben bevorzugt eine annähernd zylindrische Form, um einen möglichst geringen Strömungswiderstand zu gewährleisten. Die Druckbehälter sind dabei druckmäßig miteinander verbunden, wobei eine Vergrößerung der Oberfläche und des Volumens erreicht wird. Die Erfindung ist jedoch auch ohne druckmäßige Verbindung zwischen den beiden Druckkörpern realisierbar.

In einer bevorzugten Ausführungsform weist der Druckkörper ein oder mehrere erste Überdruckventile auf, welche durch einen vordefinierten Ansprechdruck gekennzeichnet sind. Der Ansprechdruck ist bevorzugt die Druckgrenze, die den maximal zulässigen Innendruck angibt. Ein Überdruckventil dieser Art lässt entstehende Gase beim Durchgehen der Batterie ab, sobald ein unzulässiger Druckanstieg im Innenraum erfolgt. Somit ist eine automatische Druckentlastung des Innenraumes des Druckkörpers gegeben, was das Risiko einer Explosion verringert. Bis zu dem Zeitpunkt des Druckablasses lässt das Ventil keine Gase aus dem Innenraum entweichen, um Personen, die sich in der Nähe des AUV aufhalten, nicht zu gefährden.

In einer bevorzugten Ausführungsform weist der Druckkörper ein oder mehrere zweite Überdruckventile auf, welche manuell betätigt werden können. Auch dieses zweite Überdruckventil verhindert Überdruck auf die Bauteile und vermindert das Risiko einer Explosion der Batterie. Insbesondere nach einem thermischen Durchgehen der Batterie ist das Öffnen des Druckkörpers für eine Inspektion ohne vorherigen Druckablass gefährlich. In diesem Fall kann mit dem zweiten Überdruckventil manuell so viel Druck abgelassen werden, bis eine gefahrfreie Öffnung des Druckkörpers möglich ist. Sowohl das erste wie auch das zweite Überdruckventil stellen eine Verbindung zwischen dem Innenraum des Druckkörpers und der Außenseite des AUV dar. Die Anordnung der Ventile an dem Druckkörper bzw. an den Druckbehältern ist beliebig, wobei bevorzugt eine Platzierung in der Nähe des evtl. entstehenden Gases (d.h., nahe der Batterien, z.B. im Druckschott der Batteriesektion) gewählt wird.

In einer bevorzugten Ausführungsform der Erfindung weist das Unterwasserfahrzeug eine Druckmessvorrichtung auf. Diese Druckmessvorrichtung misst den Druck im Innenraum des Druckkörpers und zeigt diesen auf einer Druckanzeige an. Die Druckanzeige ist bevorzugt von außen ablesbar. Die Messung des Druckes kann entweder digital oder analog stattfinden. Bei einer digitalen Messung misst ein Sensor im Innenraum des Druckkörpers und leitet das aus diesen Daten generierte Signal an die Druckanzeige über ein Kabel weiter. Die analoge Messung kann mit einer Druckleitung durchgeführt werden, die bis in den Innenraum hineinreicht. Durch diese Ausführungsform ist der Innendruck besser einschätzbar, so dass ggf. geeignete Maßnahmen eingeleitet werden können. Dies könnte z.B. im Falle eines Überdrucks die manuelle Betätigung des zweiten Überdruckventils bedeuten.

Personen können sich somit durch die Beobachtung der Druckanzeige, insbesondere des zeitlichen Verlaufs eines Druckanstiegs, der den Zeitpunkt für eine automatische Betätigung des ersten Überdruckventils vorhersagen lässt, vor giftigen Gasen schützen. Zusätzlich verhindern die Ventile eine Explosion des Druckkörpers, was auch dem Schutz von Personen dient. Der Druckkörper dient somit auch als Sicherheitsbehälter.

In einer weiteren bevorzugten Ausführungsform weist der Druckbehälter mehrere Teilstücke auf. Bevorzugt sind dabei zwei zylindrisch ausgebildete Teilstücke mit einem als Kegelstumpf ausgebildeten Teilstück verbunden, wobei an letzterem der Antrieb befestigt ist und somit das Heck bildet. Bevorzugt weist der Druckkörper dabei vier Lithium-Polymer-Batterien auf, die sich in den vorderen, zylindrischen Teilstücken der Druckbehälter befinden.

In einer weiteren bevorzugten Ausführungsform besteht das Material von mindestens einem Druckbehälter aus Aluminium, da Aluminium eine hohe Wärmeleitfähigkeit und eine hohe Wärmekapazität besitzt. Bevorzugt weist der Druckbehälter Endkappen auf, die einen schnellen Zugriff auf den Innenraum des Druckbehälters ermöglichen und über die externe Geräte oder Komponenten, wie z.B. weitere Sensoren angeschlossen werden können. Bevorzugt bestehen diese Endkappen aus einem leichten, festen und korrosionsbeständigen Material (z.B. eine Mischung aus Titan mit Aluminium).

In einer weiteren bevorzugten Ausführungsform werden durch die vorbestimmte Bemessung der Wärmekapazität auch Bauteile im Innenraum des Druckkörpers vor den Folgen des thermischen Durchgehens (z.B. Überhitzung) geschützt.

In einer weiteren bevorzugten Ausführungsform sind die Batterieblöcke räumlich durch isolierende Schichten thermisch voneinander getrennt. Im Fall eines thermischen Durchgehens von einer der Batterien beschränkt dies eine Kaskadenreaktion auf einen einzelnen Batterieblock.

In einer weiteren bevorzugten Ausführungsform weist das unbemannte Unterwasserfahrzeug eine oder mehrere Batterien auf. Alternativ können die Batterien im Innenraum des Druckkörpers angeordnet werden, sind aber nicht Teil des unbemannten Unterwasserfahrzeugs. Bevorzugt können die Batterien ausgetauscht werden, insbesondere nach einer Beschädigung der Batterie durch ein thermisches Durchgehen.

In einer weiteren bevorzugten Ausführungsform sind die Druckkörper-Teilstücke mit Spannringen verbunden und werden mit Schraubverbindungen gehalten. Dies ermöglicht ein leichtes Auseinanderbauen des Druckbehälters, um schnellen Zugriff auf die darin verbauten Komponenten zu erhalten. Die Schrauben der Spannring-Verschraubung sind dabei durch starre Kontaktelemente mit den Druckkörperbauteilen und dem Gewindeeinsatz verbunden, wodurch die Umfangsspannung in den Spannringen durch die zwei Spannring-Schrauben übertragen wird. Die Spannringe und die Spannring-Schrauben sind dabei so ausgebildet, dass sie auftretenden Biegemomenten und teilplastischen Verformungen durch Druck von außen oder von innen - insbesondere beim thermischen Durchgehen von einer der Batterien - standhalten. Bevorzugt weisen die Schrauben eine Festigkeitsklasse mit hoher Bruchdehnung und hoher Zugfestigkeit auf.

In einer weiteren bevorzugten Ausführungsform sind die Druckbehälter mit zwei Verbindungstunneln verbunden. Dies ermöglicht z.B. den Austausch von Druck und die Durchführung von Kabeln. Bevorzugt sind die Verbindungstunnel mit O-Ringen abgedichtet und mit sechs Sechskantschrauben an den Druckbehältern befestigt. Bevorzugt sind auch diese Schrauben für die Belastung durch auftretende Kräfte und Momente - insbesondere bei einem thermischen Durchgehen von einer der Batterien - geeignet.
In einer weiteren bevorzugten Ausführungsform sind die Endkappen mit vier Schrauben an dem Druckbehälter befestigt. Bevorzugt sind diese Schrauben gegen den Tauchdruck sowie den eventuell entstehenden Überdruck bei einem thermischen Durchgehen ausgelegt und halten ebenfalls auftretenden Momenten und Kräften stand.

In einer weiteren bevorzugten Ausführungsform herrscht im Innenraum eines einsatzbereiten AUV eine trockene atmosphärische Luft von 1 bar. Bevorzugt kann der Innenraum über bestimmte Ventile mit Stickstoff gespült werden, was Feuchtigkeit und Kondensation innerhalb des Druckbehälters verhindert. Dies ist insbesondere vorteilhaft, da so im Fall eines thermischen Durchgehens einer der Batterien die Möglichkeit des Bildens von hochentzündlichem Wasserstoffgas durch die Reaktion mit Feuchtigkeit verringert wird. Bevorzugt wird jedes Teilstück des Druckkörpers bezüglich Lecks und Temperatur überwacht und ggf. ein Notfallsystem aktiviert.

In einer weiteren bevorzugten Ausführungsform benötigen die Verbraucher innerhalb des AUV unterschiedliche Spannungen. Dabei sind von den Verbrauchern 110 V z.B. für den Hauptantrieb vorgesehen, sowie 24 V für andere Komponenten. Bevorzugt gibt die Batterie dabei 110 V Gleichspannung und/oder Wechselspannung.aus, wobei ein Spannungswandler die ausgegebenen Werte in 24 V Gleichspannung umwandelt, um Energie für die restlichen Verbraucher bereitzustellen. Bevorzugt wird dabei die 24 V Ausgangsspannung des Spannungswandlers von einer Puffer-Batterie gebuffert, um Spannungsspitzen zu absorbieren.

In einer weiteren bevorzugten Ausführungsform werden die Batterie-Zellen durch die Messung von Strom, Spannung und Temperatur von einer mikroprozessorgesteuerten Einheit überwacht. Wenn zu große Abweichungen relativ zu Normalwerten gemessen werden, gibt die Einheit Warnungen und Fehler aus. Bei kritischen Werten kann diese Einheit auch direkt das Ladegerät und/oder die Batterie abschalten. In einer bevorzugten Ausführungsform kommuniziert die mikroprozessorgesteuerte Einheit die Daten zu einem Batteriemanagementsystem. Dieses kann ebenfalls bei kritischen Werten direkt das Ladegerät und/oder die Batterie abschalten. Weiterhin speichert das Managementsystem die erhaltenen Daten auf einem Speichermedium - bevorzugt auf einer SD-Karte - kommuniziert die Batteriedaten nach extern sowie übernimmt die Steuerung des Ladegerätes und die Angleichung der Ladezustände der Zellen ("balancing").

In einer weiteren bevorzugten Ausführungsform wird jede Batterie mit einer separaten Aufladestation geladen, um Ladezeiten an Bord zu verkürzen. Vorteilhafterweise kann das AUV dabei in seinen Basisfunktionen weiterlaufen und z.B. Daten übertragen. Bevorzugt weist die Aufladestation mehrere Ladungs-Modi auf, wobei z.B. auch eine Erhaltungsladung gewählt werden kann. Vorzugsweise können Fehler und Warnungen über das Batterieladegerät ausgelesen werden. Ein detaillierter Fehlercode übermittelt dabei Informationen zur Temperatur im Innenraum, zum Ladungszustand sowie ggf. den Ausfall von Teilkomponenten. Durch diese Ausführung können die jeweils für diese Situation richtigen Maßnahmen getroffen werden.

Weitere vorteilhafte Ausführungsformen der Erfindung ergeben sich aus den Unteransprüchen sowie aus den anhand der Zeichnung näher erläuterten Ausführungsbeispielen. In der Zeichnung zeigen:
- Fig. 1: einen Druckkörper mit zwei Druckbehältern,
- Fig. 2: eine Übersichtsdarstellung eines AUV,
- Fig. 3: die Draufsicht einer Spannring-Verschraubung,
- Fig. 4: eine Detailansicht eines Verbindungstunnels,
- Fig. 5: eine detaillierte Ansicht des Bugs eines AUV,
- Fig. 6: ein Diagramm zum Überblick über die Komponenten des AUV,
- Fig. 7: ein Diagramm zur Veranschaulichung des Datenmanagementsystems und
- Fig. 8: ein Flussdiagramm über die Verfahrensschritte des Anspruchs 7.

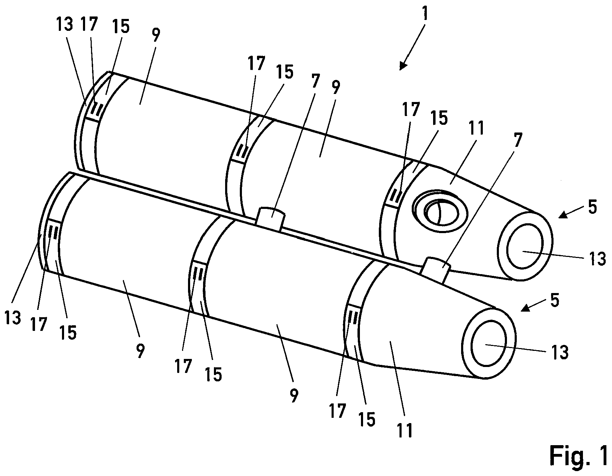

Fig. 1 zeigt einen Druckkörper 1 für ein autonomes Unterwasserfahrzeug bzw. Autonomous Underwater Vehicle (AUV) bestehend aus zwei Druckbehältern 5, die mit einem Verbindungstunnel 7 miteinander verbunden sind. Jeder der Druckbehälter 5 weist jeweils zwei zylindrische Teilstücke 9 sowie ein kegelstumpfförmiges Teilstück 11 auf. Durch diese stromlinienförmige Anordnung verringert sich der Widerstand des AUV im Wasser und bietet dadurch eine höhere Energieeffizienz. Die Enden des Druckbehälters 5 werden durch Endkappen 13 verschlossen, wodurch ein schnellerer Zugriff auf den Innenraum ermöglicht wird. Die Teilstücke 9, 11 sowie die vordere der Endkappen 13 werden durch Spannringe 15 miteinander verschraubt. Zum Spannen der Spannringe 15 und zum sicheren Verschrauben der Teilstücke 9, 11 sowie der vorderen Endkappe 13 werden für jeden Spannring 15 zwei Spannringschrauben 17 verwendet.

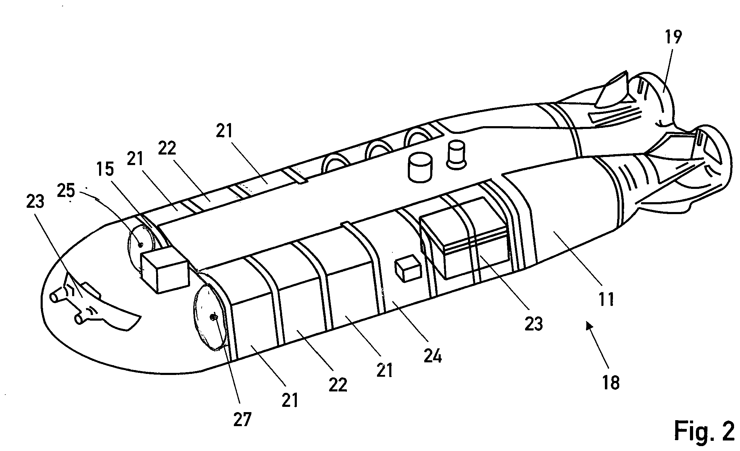

Fig. 2 zeigt einen Überblick über das AUV 18. Das kegelstumpfförmige Teilstück 11 ist dabei mit dem Antrieb 19 verbunden. Die Batterieblöcke 21 befinden sich im vorderen zylindrischen Teilstück 9 und sind vorzugsweise räumlich durch isolierende Schichten 22 thermisch voneinander getrennt. Der bei einem thermischen Durchgehen einer der Batterien 21 entstehende starke Temperaturanstieg sowie der durch die Ausgasung der Batterie 21 bedingte Druckanstieg soll den Druckkörper 1nach Möglichkeit nicht beschädigen oder beeinträchtigen. Dies wird durch die Dimensionierung der Wärmekapazität des Druckkörpers 1 erreicht, der die entstehende Wärme aufnimmt. Dadurch können die Auswirkungen eines thermischen Durchgehens auf die durchgehende Batterie 21 beschränkt werden. Bevorzugt werden somit auch Bauteile 23 im Innenraum 24 geschützt. Die Bauteile 23 können z.B. Messapparaturen sowie Sensoren oder Kameras sein, aber auch Scheinwerfer oder Dichtungen fallen unter diesen Begriff. Ferner wird auch der Druckkörper 1 selbst und dessen Bestandteile (z.B. Dichtungen) durch die vorliegende Erfindung geschützt, so dass eine Explosion des Druckkörpers 1 oder ein Wassereintritt durch beschädigte Dichtungen verhindert wird.

In einer bevorzugten Ausführungsform weist der Druckkörper 1 ein erstes Überdruckventil 25 mit einem vordefinierten Ansprechdruck auf. Das erste Überdruckventil 25 verhindert automatisch das Entstehen eines Überdrucks im Innenraum 24 durch auftretende Gase beim Durchgehen der Batterie 21. Mit einem zweiten Überdruckventil 27 ist zusätzlich ein manueller Druckablass möglich. Einer Explosion des Druckkörpers 1 durch einen zu hohen Innendruck wird dadurch entgegengewirkt.

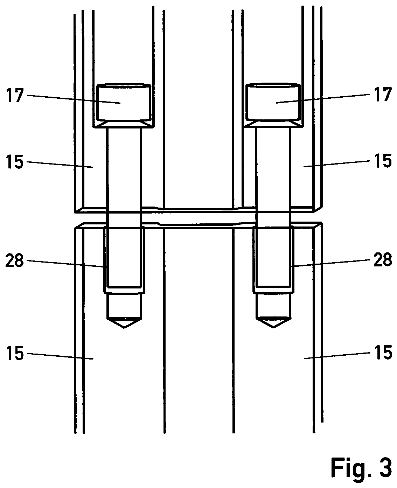

Fig. 3 zeigt eine Draufsicht auf eine Spannring-Verschraubung, wobei die Spannringe 15 mit Spannringschrauben 17 verschraubt sind. Der Gewindeeinsatz 28 ist dabei in das Material des Spannrings 15 abgesenkt um ein Hervorstehen der Spannringschrauben 17 zu verhindern. An diesen Verbindungsstellen zwischen den Teilstücken 9, 11 ist ein schneller Zugriff auf die Komponenten in den Druckbehältern 5 möglich.

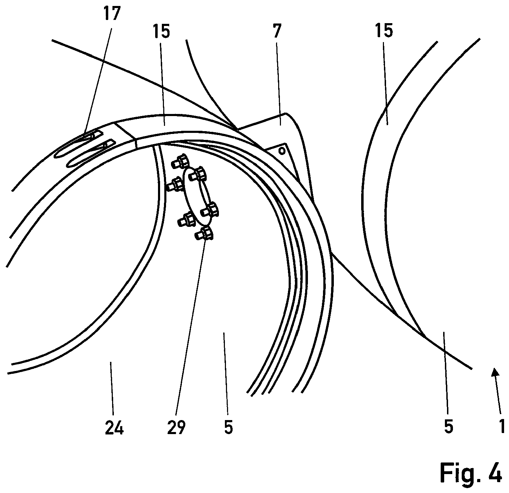

Fig. 4 zeigt eine Detailansicht des Verbindungstunnels 7 zwischen den beiden Druckbehältern 5. Vorzugsweise sind die Druckbehälter 5 an zwei Stellen - vorzugsweise am mittleren Teilstück 9 und am hinteren Teilstück 11 - durch Verbindungstunnel 7 miteinander verbunden. Die Verbindungstunnel 7 sind jeweils von den Innenseiten der Druckbehälter 5 mit Verbindungstunnel-Schrauben 29 befestigt, die vorzugsweise aus sechs Sechskantschrauben bestehen. Ein O-Ring (nicht gezeigt) dient zur Abdichtung zwischen dem Verbindungstunnel 7 und dem Druckbehälter 5. Über die Verbindungstunnel 7 sind die Druckbehälter 5 auch druckmäßig miteinander verbunden, so dass ein größeres Volumen zur Aufnahme von Gas beim Ausgasen einer Batterie 21 beim thermischen Durchgehen bereitgestellt ist.

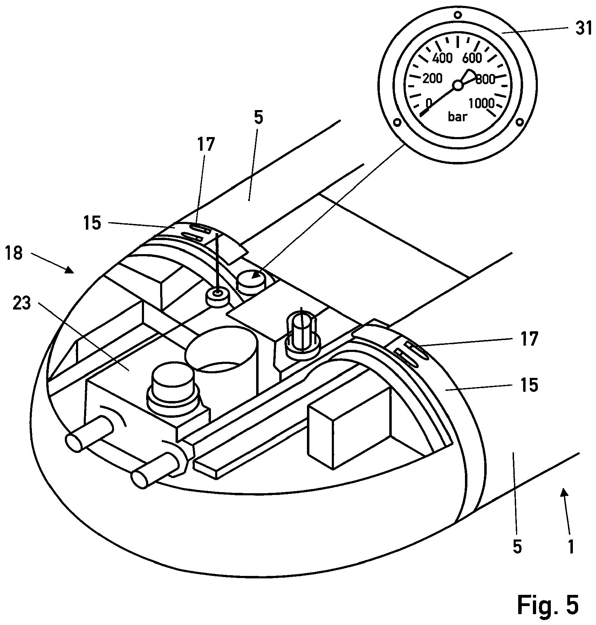

Fig. 5 zeigt eine Detailansicht des Bugs des AUV 18. Vorzugsweise befindet sich in diesem Teil des AUV 18 eine Druckanzeige 31, die von außerhalb des AUV 18 abgelesen werden kann. Durch die Möglichkeit, die Druckanzeige 31 von außen abzulesen, kann ein möglicher Überdruck durch Ausgasung einer Batterie 21 frühzeitig erkannt werden und dadurch entsprechende Sicherheits- und Abhilfemaßnahmen eingeleitet werden. Die Druckanzeige 31 ist mit einer Druckmessvorrichtung verbunden. Der Druck wird über eine Druckleitung 33, die bis in den Innenraum 24 reicht, an die Druckanzeige 31 übermittelt. Alternativ kann anstelle einer Druckleitung 33 auch ein Drucksensor verwendet werden.

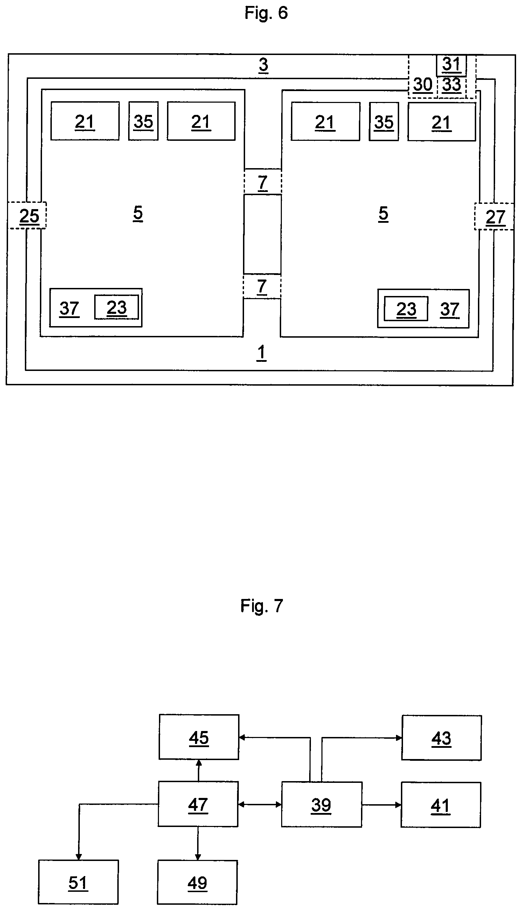

Fig. 6 zeigt einen Überblick über einen Teil der im AUV 18 beinhalteten Komponenten. Der Druckkörper 1 besteht vorzugsweise aus zwei Druckbehältern 5, in denen jeweils zwei Batterieblöcke 21 angeordnet sind. Diese sind durch thermisch isolierende Schichten 22 voneinander getrennt.

Alternativ sind die Batterien 21 nicht Teil des unbemannten Unterwasserfahrzeugs 18, können aber im Innenraum 24 des Druckkörpers 1 angeordnet werden. Bevorzugt sind die Batterien 21 mit geringem Aufwand austauschbar, insbesondere nach einer Beschädigung durch einen Batteriebrand bzw. durch anderweitige Beschädigung durch ein thermisches Durchgehen.

Das erste Überdruckventil 25 und das zweite Überdruckventil 27 können den Druck aus dem Innenraum 24 der Druckbehälter 5 ablassen. Diese stellen dabei eine Verbindung zwischen dem Innenraum 24 eines Druckbehälters 5 und der Umgebung des AUVs 18 her. Vorzugsweise sind sie dabei in der Nähe des Bereichs angeordnet, in dem die höchste Gasentwicklung stattfinden kann (z.B. in der Nähe der Batterien 21).

Eine Druckmessvorrichtung 30 beinhaltet einen Sensor oder eine Druckleitung 33 im Innenraum 24 des Druckkörpers 1. Mittels des Sensors oder der Druckleitung 33 wird der vorherrschende Druck im Innenraum 24 des Druckkörpers 1 gemessen. Die Anzeige dieser daraus resultierenden digitalen oder analogen Daten findet mittels einer Druckanzeige 31 statt, die von außerhalb des AUV 18 ablesbar ist.

Fig. 7 zeigt ein Diagramm zur Veranschaulichung des Datenmanagementsystems. Eine mikroprozessorgesteuerte Einheit 39 überwacht dabei Strom, Spannung und Temperatur der Batterieblöcke 21 mit einem Sensor 41 und vergleicht die dadurch erhobenen Daten mit einer Normalwert-Bibliothek 43. Weichen die gemessenen Daten zu stark von den Normalwerten 43 ab, kann die mikroprozessorgesteuerte Einheit 39 direkt das Ladegerät 45 und/oder die Batterie 21 abschalten. Die mikroprozessorgesteuerte Einheit 39 kommuniziert die erhobenen Daten ferner mit einem Batteriemanagementsystem 47, welches ebenfalls bei kritischen Werten das Ladegerät 45 und/oder die Batterie 21 abschalten kann. Weiterhin speichert das Batteriemanagementsystem 47 die Daten auf einem Speichermedium 49, das bevorzugt als eine SD-Karte ausgebildet ist, und kommuniziert diese Daten an weitere, extern angeschlossene Geräte 51.

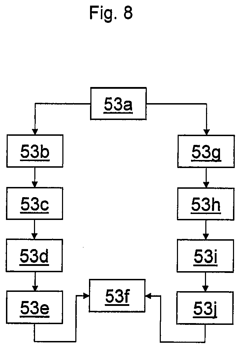

Fig. 8 zeigt ein Flussdiagram mit einem Überblick über das Verfahren. Das thermische Durchgehen 53a einer der Batterien 21 bewirkt u.a. einen Temperaturanstieg 53b. Diese produzierte Wärme wird durch die hohe Wärmekapazität des Druckkörpers 1 aufgenommen 53c und begrenzt somit die Temperatur und/oder den Temperaturanstieg 53d im Innenraum 24 des Druckkörpers 1. Der Druckkörper 1 wird somit durch diese Kettenreaktion vor Überhitzung geschützt 53e, wobei der Druckkörper 1 intakt bleibt 54f.

Die Ausgasung der Batterie 21 durch das thermische Durchgehen 53a resultiert in einem Druckanstieg 53g. Durch das erste oder zweite Überdruckventil 25, 27 wird der Überdruck im Innenraum 24 des Druckkörpers 1 abgelassen 53h, was eine Begrenzung des Druckes und oder des Druckanstiegs 53i bewirkt. Die Explosionsgefahr des Druckkörpers 1 wird somit vermindert bzw. verhindert 53j. Auch dadurch bleibt der Druckkörper 1 intakt 53f.

Sämtliche in der Figurenbeschreibung, den Ansprüchen und der Beschreibungseinleitung genannten Merkmale sind sowohl einzeln als auch in beliebiger Weise miteinander kombiniert einsetzbar. Die Offenbarung der Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Unbemanntes Unterwasserfahrzeug mit einem einen Innenraum (24) begrenzenden Druckkörper (1), wobei der Druckkörper (1) vor Überhitzung geschützt wird, wobei der Druckkörper (1) einen Druckbehälter (5) aufweist, wobei in dem Druckbehälter (5) mindestens eine Batterie angeordnet ist, **dadurch gekennzeichnet, dass** ein Material von dem Druckbehälter (5) aus Aluminium mit einer hohen Wärmeleitfähigkeit und einer hohen Wärmekapazität besteht, und eine Wärmekapazität des Druckkörpers (1) derart gewählt ist, dass bei einem thermischen Durchgehen von einer oder mehreren Batterien (21), die im Innenraum (24) angeordnet sind, eine Temperatur im Innenraum (24) maximal so stark ansteigt, dass der Druckkörper (1) intakt bleibt, wobei der Druckkörper (1) eine Wärme, die bei dem thermischen Durchgehen der Batterie (21) freigesetzt wird, aufnimmt, und eine Wärmeleitfähigkeit des Druckkörpers (1) derart gewählt ist, dass die entstehende Wärme bei einem thermischen Durchgehen von der Batterie (21) oder der Batterien (21) innerhalb des Druckkörpers (1) verteilt wird und dadurch einem Entstehen lokaler Wärmeherde entgegengewirkt wird.

2. Unbemanntes Unterwasserfahrzeug nach Anspruch 1, wobei im Innenraum (24) mehrere Batterien (21) angeordnet sind,
**dadurch gekennzeichnet, dass**
der Druckkörper (1) mehrere Druckbehälter (5) aufweist, die druckmäßig zum Druckausgleich miteinander verbunden sind und jeweils mindestens eine der Batterien (21) aufweisen, wobei das Material von mindestens einem Druckbehälter aus Aluminium besteht.

3. Unbemanntes Unterwasserfahrzeug nach einem der vorhergehenden Ansprüche,
**dadurch kennzeichnet, dass**
der Druckkörper (1) ein oder mehrere erste Überdruckventile (25) mit einem vordefinierten Ansprechdruck aufweist, um entstehende Gase beim Durchgehen der Batterie (21) oder der Batterien (21) abzulassen.

4. Unbemanntes Unterwasserfahrzeug nach einem der vorhergehenden Ansprüche,
**dadurch gekennzeichnet, dass**
der Druckkörper (1) ein oder mehrere zweite manuell betätigbare Überdruckventile (27) aufweist, um entstehende Gase beim Durchgehen der Batterie (21) oder der Batterien (21) abzulassen.

5. Unbemanntes Unterwasserfahrzeug nach einem der vorhergehenden Ansprüche,
**dadurch gekennzeichnet, dass**
der Druckkörper (1) eine Druckmess-Vorrichtung (30) aufweist, mittels welcher der im Innenraum (24) des Druckkörpers (1) vorherrschende Druck messbar ist, wobei die Druckmess-Vorrichtung (30) eine Druckanzeige (31) zum Anzeigen des gemessenen Druckes aufweist, die außerhalb des unbemannten Unterwasserfahrzeuges (18) ablesbar ist.

6. Verfahren zum Schutz eines einen Innenraum (24) begrenzenden Druckkörpers (1) eines unbemannten Unterwasserfahrzeugs (18) nach einem der Ansprüche 1 bis 5 vor Überhitzung,
**dadurch gekennzeichnet, dass**
bei einem thermischen Durchgehen (53a) von einer oder mehreren Batterien (21), die im Innenraum (24) angeordnet sind, eine Temperatur im Innenraum aufgrund einer Wärmekapazität des Druckkörpers (1) maximal so stark ansteigt, dass der Druckkörper (1) intakt bleibt (53e), wobei der Druckkörper (1) eine Wärme, die bei dem thermischen Durchgehen (53a) der Batterie (21) freigesetzt wird, aufnimmt, und
der Druckkörper (1) durch seine Wärmeleitfähigkeit die entstehende Wärme innerhalb des Druckkörpers (1) verteilt, so dass dem Entstehen lokaler Wärmeherde entgegengewirkt wird.

7. Verfahren nach Anspruch 6, wobei im Innenraum (24) mehrere Batterien angeordnet sind,
**dadurch gekennzeichnet, dass**
zwischen mehreren Druckbehältern (5) des Druckkörpers (1), die druckmäßig miteinander verbunden sind und die jeweils mindestens eine der Batterien (21) aufweisen, ein Druckausgleich stattfindet.

8. Verfahren nach einem der Ansprüche 6 bis 7,
**dadurch gekennzeichnet, dass**
ein oder mehrere erste Überdruckventile (25) des Druckkörpers (1) mit einem vordefinierten Ansprechdruck entstehende Gase bei einem Durchgehen (53a) der Batterie (21) oder der Batterien (21) ablassen (53i).

9. Verfahren nach einem der Ansprüche 6 bis 8,
**dadurch gekennzeichnet, dass**
ein oder mehrere zweite manuell betätigbare Überdruckventile (27) bei einem Durchgehen (53a) der Batterie (21) oder der Batterien (21) entstehende Gase ablassen (53i).

10. Verfahren nach einem der Ansprüche 6 bis 9,
**dadurch gekennzeichnet, dass**
ein Druck im Innenraum (24) des Druckkörpers (1) mit einer Druckmess-Vorrichtung (30) gemessen wird, wobei eine außerhalb des unbemannten Unterwasserfahrzeugs (18) ablesbare Druckanzeige (31) der Druckmess-Vorrichtung (30) den gemessenen Druck außerhalb des unbemannten Unterwasserfahrzeuges (18) anzeigt.

## Claims

1. An unmanned underwater vehicle with a pressure hull (1) limiting an interior (24), wherein the pressure hull (1) is protected against overheating, wherein
the pressure hull (1) has a pressure vessel (5), wherein at least one battery is arranged in the pressure vessel (5)
**characterized in that** a
material of the pressure vessel (5) consists of aluminum with a high thermal conductivity and a high heat capacity, and a heat capacity of the pressure hull (1) is chosen such that, in the event of a thermal runaway of one or more batteries (21) which are arranged in the interior (24), a temperature in the interior (24) increases to a maximum so quickly that the pressure hull (1) remains intact, wherein the pressure hull (1) absorbs a heat which is released in the event of the thermal runaway of the battery (21), and a thermal conductivity of the pressure hull (1) is chosen such that, in the event of a thermal runaway of the battery (21) or the batteries (21), the resulting heat is distributed within the pressure hull (1), and a local heat source created as a result is counteracted.

2. The unmanned underwater vehicle according to claim 1, wherein several batteries (21) are arranged in the interior (24),
**characterized in that**
the pressure hull (1) has several pressure vessels (5) which are connected to one another, with regards to pressure, for pressure equalization, and each have at least one of the batteries (21), wherein the material consists of at least one pressure vessel made of aluminum.

3. The unmanned underwater vehicle according to one of the preceding claims,
**characterized in that**
the pressure hull (1) has one or more first pressure-relief valves (25) with a predefined reaction pressure for purging gases which result in the event of the runaway of the battery (21) or the batteries (21).

4. The unmanned underwater vehicle according to one of the preceding claims,
**characterized in that**
the pressure hull (1) has one or more actuatable pressure-relief valves (27) for purging gases which result in the event of the runaway of the battery (21) or the batteries (21).

5. The unmanned underwater vehicle according to one of the preceding claims,
**characterized in that**
the pressure hull (1) has a pressure-measuring device (30), by means of which the pressure obtaining in the interior (24) of the pressure hull (1) can be measured, wherein the pressure-measuring device (30) has a pressure display (31) for displaying the measured pressure which can be read outside of the unmanned underwater vehicle (18).

6. A method for protecting a pressure hull (1) of an unmanned underwater vehicle (18) according to one of claims 1 to 5 against overheating, which hull limits an interior (24),
**characterized in that**
in the event of a thermal runaway (53a) of one or more batteries (21) which are arranged in the interior (24), because of a heat capacity of the pressure hull (1) a temperature in the interior increases to a maximum so quickly that the pressure hull (1) remains intact (53e), wherein the pressure hull (1) absorbs the heat which is released in the event of the thermal runaway (53a) of the battery (21), and, due to its thermal conductivity, the pressure hull (1) distributes the resulting heat within the pressure hull (1), with the result that the creation of a local heat source is counteracted.

7. The method according to claim 6, wherein several batteries are arranged in the interior (24),
**characterized in that**
a pressure equalization takes place between several pressure vessels (5) of the pressure hull (1) which are connected to one another with regards to pressure, and which respectively have at least one of the batteries (21).

8. The method according to one of claims 6 to 7,
**characterized in that**
one or more first pressure-relief valves (25) of the pressure hull (1) with a predefined reaction pressure purge (53i) gases resulting in the event of a runaway (53a) of the battery (21) or the batteries (21).

9. The method according to one of claims 6 to 8,
**characterized in that**
one or more second manually actuatable pressure-relief valves (27) purge (53i) gases in the event of a runaway (53a) of the battery (21) or the batteries (21).

10. The method according to one of claims 6 to 9,
**characterized in that**
a pressure is measured in the interior (24) of the pressure hull (1) with a pressure-measuring device (30), wherein a pressure display (31) of the pressure-measuring device (30) which can be read outside of the unmanned underwater vehicle (18) displays the measured pressure outside of the unmanned underwater vehicle (18).

## Revendications

1. Véhicule sous-marin autonome doté d'une coque haute pression (1) délimitant un espace intérieur (24), dans lequel la coque haute pression (1) est protégée contre la surchauffe, dans lequel la coque haute pression (1) présente un réservoir sous pression (5), dans lequel au moins une batterie est agencée dans le réservoir sous pression (5), **caractérisé en ce qu'**un matériau du réservoir sous pression (5) est constitué d'aluminium doté d'une conductivité thermique élevée et d'une capacité thermique élevée, et qu'une capacité thermique de la coque haute pression (1) soit choisie de telle sorte que lors d'un emballement thermique d'une ou de plusieurs batteries (21), qui sont agencées dans l'espace intérieur (24), une température de l'espace intérieur (24) s'élève au maximum de sorte que la coque haute pression (1) demeure intacte, dans lequel la coque haute pression (1) absorbe une chaleur dégagée lors de l'emballement thermique de la batterie (21), et qu'une conductivité thermique de la coque haute pression (1) soit choisie de telle sorte que la chaleur dégagée lors de l'emballement thermique de la batterie (21) ou des batteries (21) à l'intérieur de la coque haute pression (1) soit répartie et qu'ainsi l'on contrebalance l'apparition de foyers thermiques locaux.

2. Véhicule sous-marin autonome selon la revendication 1, dans lequel plusieurs batteries (21) sont agencées dans l'espace intérieur (24), **caractérisé en ce que** la coque haute pression (1) présente plusieurs réservoirs sous pression (5), qui sont reliés l'un à l'autre en fonction de la pression afin de compenser la pression et chacun présentant au moins une des batteries (21), dans lequel le matériau d'au moins un réservoir sous pression est constitué d'aluminium.

3. Véhicule sous-marin autonome selon l'une quelconque des revendications précédentes, **caractérisé en ce que** la coque haute pression (1) présente une ou plusieurs premières soupapes de sûreté (25) dotées d'une pression de déclenchement prédéfinie afin de libérer les gaz générés lors de l'emballement thermique de la batterie (21) ou des batteries (21).

4. Véhicule sous-marin autonome selon l'une quelconque des revendications précédentes, **caractérisé en ce que** la coque haute pression (1) présente une ou plusieurs secondes soupapes de sûreté (27) actionnables manuellement afin de libérer les gaz générés lors de l'emballement thermique de la batterie (21) ou des batteries (21).

5. Véhicule sous-marin autonome selon l'une quelconque des revendications précédentes, **caractérisé en ce que** la coque haute pression (1) présente un dispositif de mesure de pression (30) à l'aide duquel la pression régnant dans l'espace intérieur (24) de la coque haute pression (1) est mesurable, dans lequel le dispositif de mesure de pression (30) présente un affichage de la pression (31) pour indiquer la pression mesurée, qui peut être consulté depuis l'extérieur du véhicule sous-marin autonome (18).

6. Procédé de protection contre la surchauffe d'une coque haute pression (1) délimitant un espace intérieur (24) d'un véhicule sous-marin autonome (18) selon l'une quelconque des revendications 1 à 5, **caractérisé en ce que** lors de l'emballement thermique (53a) d'une ou de plusieurs batteries (21), qui sont agencées dans l'espace intérieur (24), une température de l'espace intérieur s'élève, en raison d'une capacité thermique de la coque haute pression (1), au maximum de sorte que la coque haute pression (1) demeure intacte (53e), dans lequel la coque haute pression (1) absorbe une chaleur dégagée lors de l'emballement thermique (53a) de la batterie (21), et que la coque haute pression (1) répartit, grâce à sa conductivité thermique, la chaleur générée à l'intérieur de la coque haute pression (1), de sorte que l'apparition de foyers thermiques locaux s'en trouve contrebalancée.

7. Procédé selon la revendication 6, dans lequel plusieurs batteries sont agencées dans l'espace intérieur (24), **caractérisé en ce qu'**une compensation de pression s'effectue entre plusieurs réservoirs sous pression (5) de la coque haute pression (1), qui sont reliés entre eux en fonction de la pression et qui présentent chacun au moins une des batteries (21).

8. Procédé selon l'une quelconque des revendications 6 à 7, **caractérisé en ce qu'**une ou plusieurs premières soupapes de sûreté (25) de la coque haute pression (1) dotées d'une pression de déclenchement prédéfinie libèrent (53i) les gaz générés lors de l'emballement (53a) de la batterie (21) ou des batteries (21).

9. Procédé selon l'une quelconque des revendications 6 à 8, **caractérisé en ce qu'**une ou plusieurs secondes soupapes de sûreté (27) actionnables manuellement libèrent (53i) les gaz générés lors de l'emballement (53a) de la batterie (21) ou des batteries (21).

10. Procédé selon l'une quelconque des revendications 6 à 9, **caractérisé en ce qu'**une pression dans l'espace intérieur (24) de la coque haute pression (1) est mesurée avec un dispositif de mesure de pression (30), dans lequel un affichage de la pression (31) du dispositif de mesure de pression (30) consultable depuis l'extérieur du véhicule sous-marin autonome (18) indique la pression mesurée à l'extérieur du véhicule sous-marin autonome (18).
